# EUROPÄISCHE PATENTSCHRIFT

(11) **EP 2 812 142 B1**
(45) Veröffentlichungstag und Bekanntmachung des Hinweises auf die Patenterteilung: **26.07.2023**
(21) Anmeldenummer: 13702395.8
(22) Anmeldetag: 23.01.2013
(51) Int. Cl.: B23B 31/11, B23C 5/10, B23C 5/26

(54) **EINSCHRAUBWERKZEUG UND WERKZEUGAUFNAHME FÜR EIN DERARTIGES EINSCHRAUBWERKZEUG**
SCREWDRIVING TOOL AND TOOL HOLDER FOR SUCH A SCREWDRIVING TOOL
OUTIL À VISSER ET LOGEMENT D'OUTIL POUR UN TEL OUTIL À VISSER

(30) Priorität: 07.02.2012 DE 102012100976
(43) Veröffentlichungstag der Anmeldung: 17.12.2014
(73) Patentinhaber: Franz Haimer Maschinenbau KG, 86568 Hollenbach-Igenhausen (DE)
(72) Erfinder: HAIMER, Franz, 86568 Igenhausen (DE)
(74) Vertreter: Schwarz, Wolfgang
(86) Internationale Anmeldenummer: PCT/EP2013/051243
(87) Internationale Veröffentlichungsnummer: WO 2013/117431

(56) Entgegenhaltungen:
- WO-A1-2006/033616
- DE-A1- 3 912 503
- DE-A1-102005 012 025
- DE-A1-102010 028 561
- DE-B3-102009 048 010
- FR-A- 1 019 411
- JP-A- H05 318 208
- US-A- 5 873 687
- US-A1- 2002 021 945
- US-A1- 2006 051 167

## Beschreibung

Die Erfindung betrifft ein Einschraubwerkzeug nach dem Oberbegriff des Anspruchs 1. Die Erfindung betrifft außerdem eine Werkzeugaufnahme für ein derartiges Einschraubwerkzeug und eine Werkzeuganordnung mit Einschraubwerkzeug und Werkzeugaufnahme.

Aus der WO 2006/033617 A1 ist ein Einschraubwerkzeug bekannt, das einen Werkzeugkopf und einen Werkzeugschaft mit einem Außengewinde und einem zwischen dem Werkzeugkopf und dem Außengewinde angeordneten ersten Abstützbereich enthält. Bei diesem bekannten Einschraubwerkzeug ist der erste Abstützbereich entweder als Radialbund mit einer Planfläche und einer zylindrischen inneren Anlagefläche oder als konische Anlagefläche ausgeführt. Bei der ersten Alternative wird über die Planfläche des Radialbund zwar eine genaue axiale Positionierung des Einsschraubwerkzeugs innerhalb einer Aufnahme erreicht, allerdings ist die Zentrierwirkung über die zylindrische Anlagefläche beschränkt. Über die konische Anlagefläche ist zwar eine bessere Zentrierwirkung erreichbar, jedoch können sich die Außenwände der Werkzeugaufnahmen infolge der Keilwirkung der konischen Anlagefläche nach außen verformen, was sich negativ auf die axiale Ausrichtung auswirken kann.

In der FR 1 019 411 A ist ein in eine Spindelwelle einsetzbarer Werkzeughaltekopf zur Halterung eines an einem unteren Ende des Werkzeughaltekopfs lösbar befestigten Werkzeugs offenbart. Der Werkzeughaltekopf weist einen Werkzeugschaft mit einem Außengewinde und einem Abstützbereich mit einer konischen Anlagefläche auf. Zwischen der konischen Anlagefläche und dem Gewinde ist eine konische Übergangsfläche vorgesehen. Die zur Anlage an der Spindelwelle gelangende konische Anlagefläche des Werkzeugkopfs weist jedoch einen relativ kleinen Kegelwinkel auf.

Bei einer aus der DE 39 12 503 A1 bekannten Spanneinrichtung für auswechselbare Werkzeugköpfe wird ein mit einem kegeligen Aufnahmezapfen versehener Werkzeugkopf in einen mit einer kegeligen Aufnahmebohrung versehenen Werkzeughalter eingesteckt und anschließend mit Hilfe einer Spannschraube axial eingezogen. Eine an der vorderen Stirnseite des Werkzeughalters angrenzende kegelige Anlagefläche und eine entsprechende kegelige Anlagefläche am Werkzeugkopf weisen einen Kegelwinkel von ca. 85° auf.

Die DE 10 2009 048 010 B3, die ein Einschraubwerkzeug gemäß dem Oberbegriff des Anspruchs 1 offenbart, offenbart einen Werkzeugkopf mit einer korrespondierenden Werkzeugaufnahme, wobei zur Kupplung ein Werkzeuginterface vorgesehen ist, das einen Abstützbereich mit zwei konischen Flächen aufweist. Zur Erhöhung der Flexibilität des Werkzeuginterfaces ist der Abstützbereich radial geschlitzt. Um eine Beschädigung des Werkzeuginterfaces durch die Radialkräfte aus den konischen Flächen zu verhindern, ist es notwendig, dass die radiale Krafteinwirkung auf das Werkzeuginterface durch die konischen Flächen ausgeglichen wird. Aus diesem Grund zeigen die den konischen Flächen zugrundeliegenden Kegel in entgegengesetzte Richtungen.

Aus der JP H05 318208 A ist ein weiteres Einschraubwerkzeug mit einer dazugehörigen Werkzeugaufnahme bekannt. Das Einschraubwerkzeug weist hier jedoch nur eine zur Anlage mit einer konischen Auflagefläche der Werkzeugaufnahme gelangende konische Anlagefläche auf.

In der US 2006/0051167 A1 ist eine Werkzeugaufnahme gemäß dem Oberbegriff des Anspruchs 9 mit einer konischen Aufnahmeöffnung für ein Werkzeug offenbart. Bei dieser Werkzeugaufnahme wird das Werkzeug jedoch in die konische Aufnahmeöffnung eingesteckt und durch eine gesonderte Schraube fixiert, die in ein am inneren Ende der Aufnahmeöffnung angeordnetes Innengewinde eingreift.

Aufgabe der Erfindung ist es, ein Einschraubwerkzeug, eine Werkzeugaufnahme für ein derartiges Einschraubwerkzeug und eine Werkzeuganordnung mit Werkzeugaufnahme und Einschraubwerkzeug zu schaffen, die eine positionsgenaue und reproduzierbare Aufnahme und Halterung eines Einschraubwerkzeugs ermöglichen.

Diese Aufgabe wird durch ein Einschraubwerkzeug mit den Merkmalen des Anspruchs 1, durch eine Werkzeugaufnahme mit den Merkmalen des Anspruchs 9 und durch eine Werkzeuganordnung mit den Merkmalen des Anspruchs 16 gelöst. Zweckmäßige Weiterbildungen und vorteilhafte Ausführungsformen der Erfindung sind Gegenstand der Unteransprüche.

Bei dem erfindungsgemäßen Einschraubwerkzeug wird der zwischen dem Werkzeugkopf und dem Außengewinde angeordnete Abstützbereich durch zwei konische Anlageflächen mit unterschiedlichen Kegelwinkeln gebildet. Auch bei der zu dem Einschraubwerkzeug gehörenden Werkzeugaufnahme wird der zwischen einer vorderen Stirnseite der Werkzeugaufnahme und einem Innengewinde angeordnete Abstützbereich durch zwei konische Auflageflächen mit unterschiedlichen Kegelwinkeln gebildet. Dadurch wird ein Abstützbereich mit einem Doppelkonus geschaffen, der gegenüber einer Plananlage oder einer geraden Anlagefläche eine vergrößerte Auflagefläche und eine verbesserte Zentrier- und Abstützwirkung ermöglicht. Bei der Werkzeugaufnahme ist außerdem an einem inneren Ende der Aufnahmeöffnung ein als zylindrische, kugelförmige oder konische Anlagefläche ausgebildeter innerer Anlagebereich vorgesehen. Die Durchmesser der konischen ersten Anlagefläche und der dazugehörigen konischen ersten Auflagefläche verringern sich in Einschraubrichtung des Werkzeugs, dass heißt die Kegel, welche den beiden den Doppelkonus bildenden Kegelflächen zugrunde liegen, zeigen in dieselbe Richtung. In dieser Ausführungsform ist eine leichte Aufspreizung der Werkzeugaufnahme durch die konischen Flächen möglich. Im Vergleich zu einer planen axialen Anlagefläche steigt hierbei die Gewindevorspannung mit dem Einschraubwinkel weniger stark an und es ist somit eine exaktere Einstellung der Vorspannung bei der Montage des Einschraubwerkzeugs möglich. Da die Einschraubwerkzeuge zumeist einteilig aus sehr harten Werkstoffen hergestellt werden, beschränkt sich die für die Gewindearretierung notwendige elastische Verformung des Gewindes zu einem großen Teil auf die Verformung des Innengewindes des Werkzeughalters. Im Hinblick auf eine möglichst lange Lebensdauer eines solchen Werkzeughalters ist eine exakte Einstellung der Gewindevorspannung somit äußerst wichtig. Durch einen Doppelkonus der beschriebenen Art wird eine exakte, weil besser einstellbare Gewindevorspannung ermöglicht.

Die an den Werkzeugkopf angrenzende erste konische Anlagefläche des Einschraubwerkzeugs und die dazugehörige konische erste Auflagefläche an der Stirnseite der Werkzeugaufnahme weisen vorzugsweise einen relativ großen Kegelwinkel auf. Hier hat sich ein Kegelwinkel von 170° als günstig herausgestellt. In einer bevorzugten Ausgestaltung schließt sich an diese Fläche am Einschraubwerkzeug die zweite konische Anlagefläche und an der Werkzeugaufnahme die dazugehörige zweite konische Auflagefläche an. Diese zweite Anlagefläche und die dazu korrespondierende zweite Auflagefläche weisen vorzugsweise relativ kleine Kegelwinkel auf. Hier hat sich ein Kegelwinkel von 10° als günstig herausgestellt. Es ist aber auch möglich zwischen den beiden konischen Flächen einen z.B. zylindrischen Zwischenbereich vorzusehen. Ein Doppelkonus der beschriebenen Art mit zwei unterschiedlichen Kegelwinkeln hat den Vorteil, dass der kleine Kegelwinkel eine gute Zentrierung des Einschraubwerkzeugs in der Werkzeugaufnahme und der große Kegelwinkel eine zusätzliche Zentrierung aber mit stark reduzierten Aufspreizkräften an der Werkzeugaufnahme ermöglicht. Zudem wird durch die konische erste Anlagefläche die Steifigkeit des Werkzeugs erhöht, da das Werkzeug bei radialer Belastung nicht abgleiten kann, wie das bei einer planen Anlagefläche der Fall ist.

In einer weiteren vorteilhaften Weise ist am freien Ende des Werkzeugschafts ein weiterer Abstützbereich mit einem Anlagebereich vorgesehen. Dieser weitere Anlagebereich am Werkzeugschaft des Einschraubwerkzeugs kann z.B. kugelförmig ausgebildet sein, während der dazugehörige weitere Auflagebereich an der Werkzeugaufnahme als zylindrische Auflagefläche ausgeführt sein kann. Durch den kugelförmigen Anlagebereich und die zylindrische Auflagefläche wird in diesen Bereich eine nur partielle Berührung zwischen dem Einschraubwerkzeug und der Werkzeugaufnahme erreicht. Zweckmäßigerweise weist der kugelförmige weitere Anlagebereich ein Übermaß gegenüber der zylindrischen Auflagefläche auf, so dass die Vorspannung in diesem weiteren Abstützbereich unabhängig von der Einschraubtiefe ist. Es sind aber auch andere Ausgestaltungen des weiteren Abstützbereichs denkbar. So können an dem Werkzeug und der Werkzeugaufnahme auch in beliebiger Kombination kugelförmige, konische oder zylindrische Anlageflächen bzw. Auflageflächen vorgesehen sein.

Das Außengewinde am Einschraubwerkzeug und das entsprechende Innengewinde an der Werkzeugaufnahme weisen zweckmäßigerweise eine zum freien Ende des Werkzeugschafts hin bzw. zum inneren Ende der Aufnahmeöffnung hin abnehmende Gewindetiefe auf. Die Gewinde können aber auch eine konstante Gewindetiefe aufweisen.

Für das Außengewinde und das entsprechende Innengewinde haben sich Trapezgewinde oder Flachgewinde als besonders zweckmäßig erwiesen. Die Gewinde können aber auch als Spitzgewinde, Rundgewinde, Sägezahngewinde oder dgl. ausgebildet sein.

In einer weiteren vorteilhaften Ausgestaltung ist eine Einsatzbuchse vorgesehen, welche in den Werkzeughalter eingesetzt wird. Diese Einsatzbuchse kann die Auflageflächen des ersten und zweiten Abstützbereichs sowie das Gewinde, aber auch nur einen Teil dieser Elemente beinhalten. Durch die Wahl eines geeigneten Materials für die Einsatzbuchse kann eine Schwingungsdämpfung erreicht werden. Ferner kann damit auch der Werkzeughalter aus festem, aber sprödem Hartmetall und die Einsatzbuchse mit dem Gewinde aus weicherem, dafür aber eher elastischem Stahl hergestellt werden, was für eine sichere Arretierung der Schraubverbindung günstig ist. Zudem kann der Werkzeughalter durch verschiedene Einsatzbuchsen für die Aufnahme von unterschiedlichen Geometrien von Werkzeugen angepasst werden. Die Einsatzbuchse kann aus einem Teil oder aus mehreren Teilen bestehen, die auch aus unterschiedlichen Materialien bestehen können.

Um die Herstellung des Einschraubwerkzeugs zu vereinfachen, kann am Werkzeugschaft eine Greiferrille zum Einspannen des Einschraubwerkzeugs vorgesehen sein. In die Greiferrille können z.B. zangenförmige Greiferelemente einer Spannvorrichtung zum Spannen des Werkzeugs in der Werkzeugaufnahme eingreifen. Beim Spannen mit Hilfe der Greiferrille können Werkzeug und Werkzeughalter mit einer Verdrehsicherung versehen sein.

Die Werkzeugaufnahme kann beispielsweise aus Stahl, Hartmetall, Aluminium oder einem Faserverbundwerkstoff, insbesondere mit Glas- oder Kohlefaser, bestehen.

Weitere Besonderheiten und Vorzüge der Erfindung ergeben sich aus der folgenden Beschreibung bevorzugter Ausführungsbeispiele anhand der Zeichnungen. Es zeigen:
- **Figur 1**: eine Werkzeugaufnahme und ein Einschraubwerkzeug in einem Längsschnitt;
- **Figur 2**: die Werkzeugaufnahme und das Einschraubwerkzeug von Figur 1 in einer Perspektivansicht;
- **Figur 3**: eine Detailansicht X von Figur 1;
- **Figur 4**: eine Detailansicht Y von Figur 1;
- **Figur 5**: eine Detailansicht Z von Figur 1;
- **Figur 6**: ein Einschraubwerkzeug mit einem Trapezgewinde;
- **Figur 7**: eine Werkzeugaufnahme für ein Einschraubwerkzeug nach Figur 6;
- **Figur 8**: ein Einschraubwerkzeug mit einem Flachgewinde;
- **Figur 9**: eine Werkzeugaufnahme für ein Einschraubwerkzeug nach Figur 8;
- **Figur 10**: ein nicht erfindungsgemäßes Ausführungsbeispiel eines Einschraubwerkzeugs mit einem Trapezgewinde;
- **Figur 11**: eine vergrößerte Teilansicht Y von Figur 10;
- **Figur 12**: ein weiteres Ausführungsbeispiel einer Werkzeugaufnahme und eines Einschraubwerkzeugs in einem Längsschnitt und
- **Figur 13**: eine vergrößerte Teilansicht Y von Figur 12.

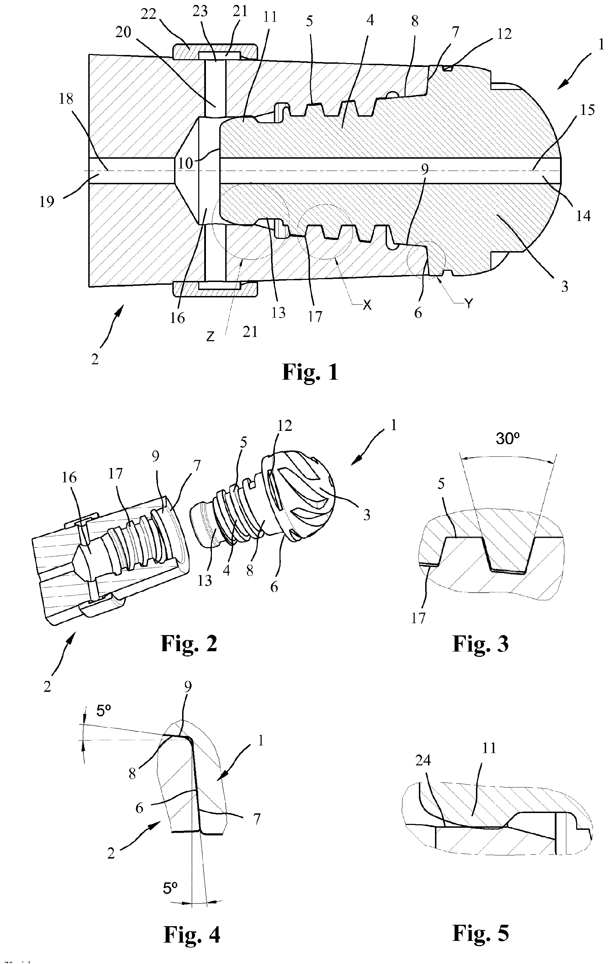

In den Figuren 1 und 2 ist eine Werkzeuganordnung mit einem Einschraubwerkzeug 1 und einer zugehörigen Werkzeugaufnahme 2 in einem Längsschnitt und einer Perspektivansicht gezeigt. Das Einschraubwerkzeug 1 weist einen hier als Kugelkopffräser ausgebildeten Werkzeugkopf 3 und einen sich konisch nach hinten verjüngenden Werkzeugschaft 4 mit einem Außengewinde 5 auf. Zwischen dem Werkzeugkopf 3 und dem Außengewinde 5 ist ein erster Abstützbereich mit einer ersten konischen Anlagefläche 6 zur Anlage an einer gegenkonischen Auflagefläche 7 an einer vorderen Stirnseite der Werkzeugaufnahme 2 und eine zweite konische Anlagefläche 8 zur Anlage an einer zweiten konischen Auflagefläche 9 im Inneren der Werkzeugaufnahme vorgesehen. Dadurch ergibt sich an dem Übergang zwischen dem Werkzeugkopf 3 und dem Außengewinde 5 ein Doppelkonus, der für eine verbesserte Zentrierung und erhöhte Abstützwirkung sorgt. An einem freien hinteren Ende 10 des Werkzeugschafts 4 befindet sich ein zweiter Abstützbereich 11.

Wie besonders aus Figur 2 hervorgeht, weist der Werkzeugkopf 3 an seiner Außenseite mehrere über den Umfang verteilte Schlüsselflächen 12 zum Einschrauben des Einschraubwerkzeug 1 in die Werkzeugaufnahme 2 auf. Die Schlüsselflächen 12 können auch zum automatischen Werkzeugwechsel in der Fräsmaschine verwendet werden. Zwischen dem hinteren Ende des Außengewindes 5 und dem hinteren zweiten Abstützbereich 11 ist im hinteren Bereich des Werkzeugschafts 4 außerdem eine Greiferrille 13 zum automatischen Spannen des Einschraubwerkzeugs 1 in der Werkzeugaufnahme 2 vorgesehen. In die Greiferrille 13 können z.B. zangenförmige Greiferelemente einer Spannvorrichtung eingreifen, um das Einschraubwerkzeug 1 in der Werkzeugaufnahme 2 sicher greifen bzw. halten zu können. Durch das Einschraubwerkzeug 1 verläuft ferner eine in Figur 1 erkennbare zentrale Durchgangsöffnung 14, über die Kühlschmiermittel, Druckluft oder ein anderes Arbeitsfluid zum Bearbeitungsbereich geleitet werden kann. Die Durchgangsöffnung 14 ist koaxial zur Mittelachse 15 des Einschraubwerkzeugs 1 angeordnet, es sind aber auch andere Anordnungen, z.B. mit echt parallelen oder angewinkelten Längsachsen möglich.

Die zu dem Einschraubwerkzeug 1 gehörende Werkzeugaufnahme 2 weist eine Aufnahmeöffnung 16 mit einem Innengewinde 17 auf. An der vorderen Stirnseite des Werkzeughalters 2 ist ein äußerer Abstützbereich mit der ersten Auflagefläche 7 zur Anlage an der ersten Anlagefläche 6 und mit der zweiten Auflagefläche 9 zur Anlage an der zweiten Anlagefläche 8 des Einschraubwerkzeugs 1 vorgesehen. Auch in der Werkzeugaufnahme 2 ist eine zu deren Mittelachse 18 koaxiale Zufuhröffnung 19 für die Zuführung eines Arbeitsfluids zur Durchgangsöffnung 14 des Einschraubwerkzeugs 1 angeordnet, wobei auch hier eine andere Anordnung vergleichbar der Durchgangsöffnung 14 möglich ist. In der Werkzeugaufnahme 2 können auch radiale Bohrungen 20 angeordnet sein, die in die Aufnahmeöffnung 16 oder auch in die Zuführung 19 münden. An der Außenseite der Werkzeugaufnahme 2 kann eine mit einer Ringnut 21 an der Innenseite versehene Hülse 22 für eine äußere Kühlmittelzuführung angeordnet sein. Die Ringnut 21 kann ebenso aber auch an der Werkzeugaufnahme 2 angeformt sein.

Bei der in den Figuren 1 bis 7 dargestellten Ausführung sind das Außengewinde 5 des Einschraubwerkzeugs 1 und das dazu gehörige Innengewinde 17 der Werkzeugaufnahme 2 als Trapezgewinde mit einem in Figur 3 dargestellten Flankenwinkel von 30° ausgeführt. Das Außengewinde 5 des Einschraubwerkzeugs 1 und das dazu gehörige Innengewinde 17 der Werkzeugaufnahme 2 können aber auch als Trapezgewinde mit anderen Flankenwinkeln ausgeführt sein. Im Gegensatz zu den herkömmlichen Gewinden, bei denen die Gewindegänge eine gleichbleibende Gewindetiefe aufweisen, weist das hier verwendete Außengewinde 5 eine vom Werkzeugkopf 3 zum freien hinteren Ende 10 des Werkzeugschafts 4 hin abnehmende Gewindetiefe auf. Auch bei dem Innengewinde 17 der Werkzeugaufnahme 2 nimmt die Gewindetiefe von der zweiten Auflagefläche 9 bis zum zweiten Abstützbereich 11 hin ab.

Aus Figur 4 ist ersichtlich, dass die erste Anlagefläche 6 des Einschraubwerkzeugs 1 und die entsprechende erste Auflagefläche 7 der Werkzeugaufnahme 2 um jeweils 5° bezüglich einer zu den Mittelachsen 15 bzw. 18 senkrechten Ebene in Richtung des vorderen Endes des Werkzeugkopfs 3 geneigt sind. Dadurch weisen die erste konische Anlagefläche 6 und auch die erste konische Auflagefläche 7 einen Kegelwinkel von mindestens 140° und maximal 179°, aber bevorzugt 170° auf. Der Durchmesser der zweiten konischen Anlagefläche 8 des Einschraubwerkzeugs 1 und der Durchmesser der zweiten konischen Auflagefläche 9 der Werkzeugaufnahme 2 verjüngen sich in Einschraubrichtung, so dass sich ein Kegelwinkel von mindestens 1° und maximal 90°, aber bevorzugt 10° ergibt, was einen Winkel der Kegelflächen von 5° gegenüber den Mittelachsen 15 bzw. 18 bedeutet.

Der zweite Abstützbereich 11 des Einschraubwerkzeugs 1 ist gemäß Figur 5 kugelförmig ausgebildet und gelangt zur Anlage an einer zylindrischen Anlagefläche 24 am Ende der Aufnahmeöffnung 16. Durch die zylindrische Anlagefläche 24 wird in der Werkzeugaufnahme ein weiterer innerer Anlagebereich gebildet. Der kugelförmige Abstützbereich 11 sorgt für eine nur partielle Berührung zwischen dem Einschraubwerkzeug 1 und der Werkzeugaufnahme 2. Zweckmäßigerweise weist der kugelförmige zweite Abstützbereich 11 ein Übermaß gegenüber der zylindrischen Anlagefläche 24 auf, so dass die Vorspannung in diesem zweiten Abstützbereich unabhängig von der Einschraubtiefe ist.

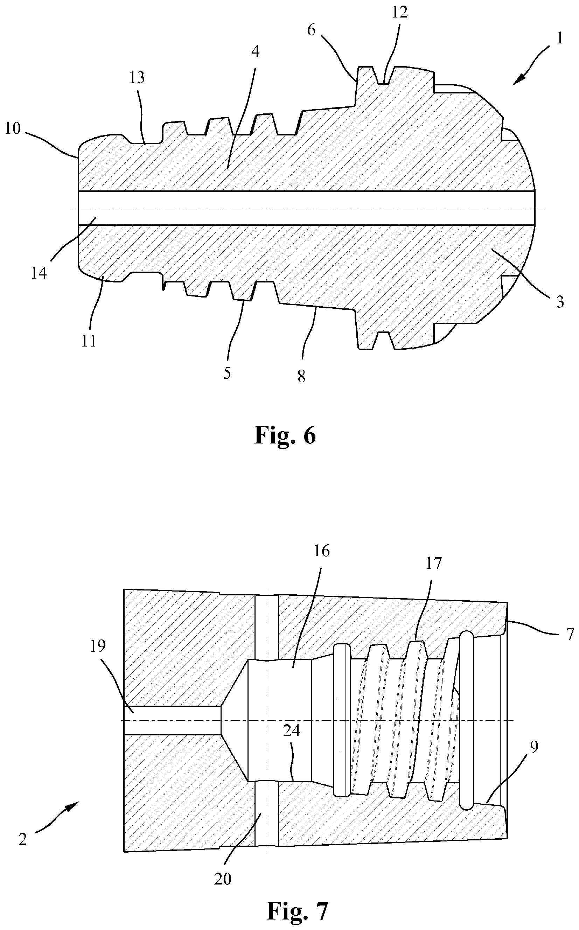

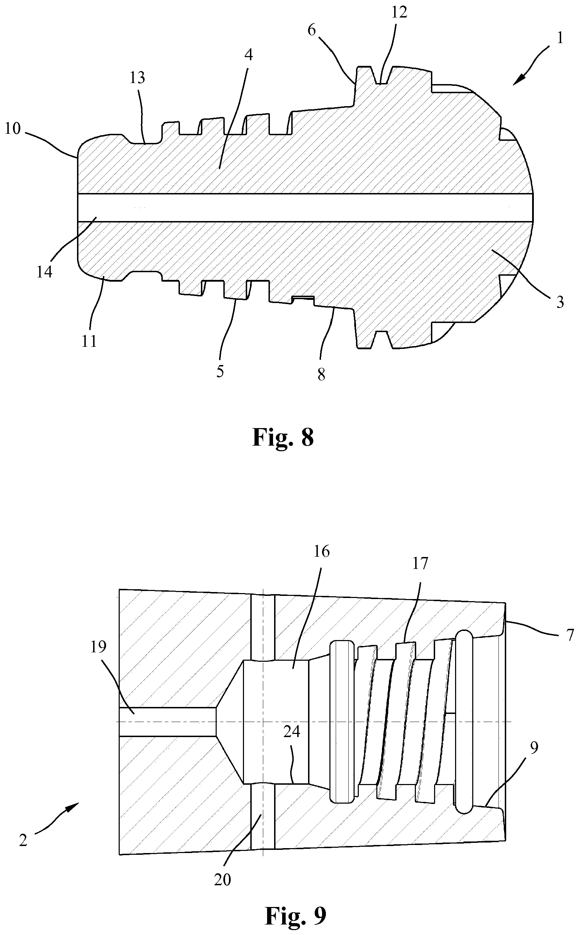

In den Figuren 8 und 9 ist ein weiteres Ausführungsbeispiel eines Einschraubwerkzeugs 1 und einer zugehörigen Werkzeugaufnahme 2 gezeigt. Im Gegensatz zur der Ausführung der Figuren 6 und 7 sind bei diesem Ausführungsbeispiel das Außengewinde 5 des Einschraubwerkzeugs 1 und das Innengewinde 17 der Werkzeugaufnahme 2 als Flachgewinde ausgeführt. Ansonsten entspricht diese Ausführung dem vorherigen Ausführungsbeispiel, so dass einander entsprechende Bauteile auch mit denselben Bezugszeichen versehen sind. Auch bei dieser Ausführung weist das hier verwendete Außengewinde 5 eine vom Werkzeugkopf 3 zum freien hinteren Ende 10 des Werkzeugschafts 4 hin abnehmende Gewindetiefe auf. Ferner nimmt auch hier beim Innengewinde 17 der Werkzeugaufnahme 2 die Gewindetiefe von der zweiten Auflagefläche 9 bis zum zweiten Abstützbereich 11 hin ab.

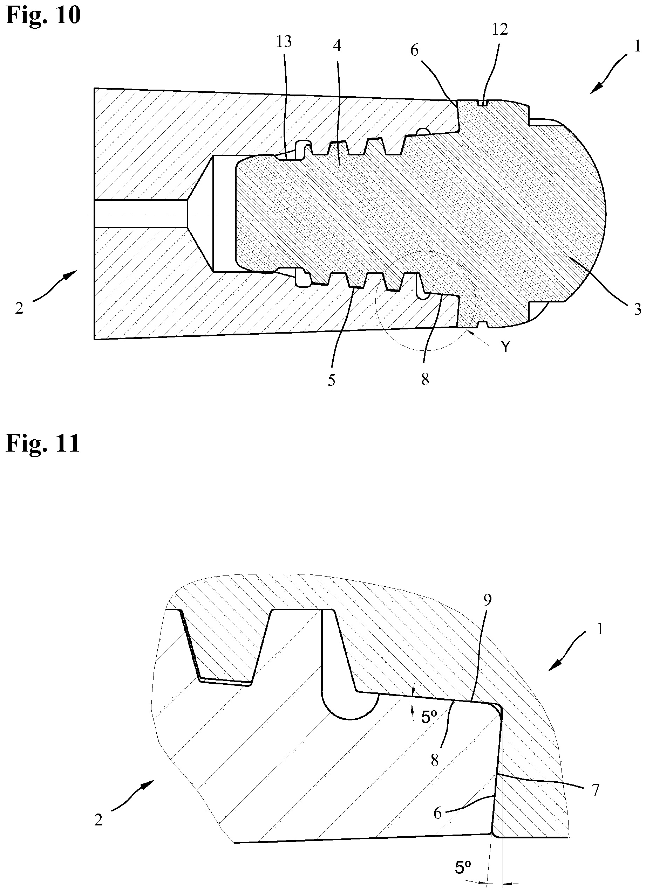

In den Figuren 10 und 11 ist ein nicht erfindungsgemäßes Ausführungsbeispiel gezeigt, bei dem sich die Durchmesser der konischen ersten Anlagefläche 6 des Einschraubwerkzeugs 1 und der dazugehörigen konischen ersten Auflagefläche 7 der Werkzeugaufnahme 2 in Einschraubrichtung des Einschraubwerkzeugs 1 erweitern. Die erste Anlagefläche 6 und die entsprechende erste Auflagefläche 7 sind um jeweils 5° bezüglich einer zu den Mittelachsen 15 bzw. 18 senkrechten Ebene in Richtung des Werkzeugschafts 4 geneigt. Dadurch weist die erste konische Anlagefläche 6 und auch die erste konische Auflagefläche 7 genau wie in dem Ausführungsbeispiel aus Fig. 4 einen Kegelwinkel von 170° auf. Die zweite konische Anlagefläche 8 und die zweite konische Auflagefläche 9 verjüngen sich mit einem Winkel von 5° gegenüber den Mittelachsen 15 und 18, so dass sich ein Kegelwinkel von 10° ergibt. Im Unterschied zu den Ausführungen der Figuren 1 bis 9 zeigen die Kegel, welche den beiden den Doppelkonus bildenden Kegelflächen zugrunde liegen, in entgegen gesetzte Richtungen.

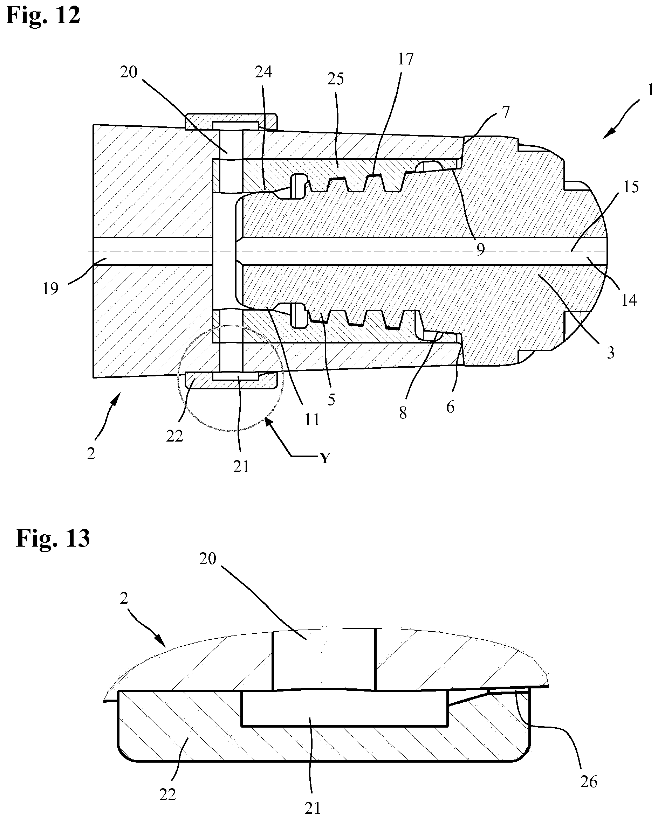

In der Figur 12 ist ein Ausführungsbeispiel gezeigt, bei dem eine Einsatzbuchse 25, welche die zweite konische Auflagefläche 9, das Innengewinde 17 und die zylindrische Anlagefläche 24 enthält, in die Aufnahmeöffnung 16 der Werkzeugaufnahme 2 eingesetzt ist. Die radialen Bohrungen 20 gehen durch die Werkzeugaufnahme 2 und die Einsatzbuchse 25 und münden in der Aufnahmeöffnung 16 der Werkzeugaufnahme 2.

Figur 13 zeigt eine vergrößerte Darstellung der Hülse 22 für die äußere Kühlmittelzuführung. In Richtung des Werkzeugs weist die Hülse 22 einen oder mehrere Auslässe 26 auf, durch die das über die radialen Bohrungen 20 nach außen geführte und durch die äußeren Öffnungen 23 austretende Kühlmittel an das Werkzeug bzw. die zu bearbeitende Stelle geleitet werden kann. Der oder die Auslässe 26 können als umlaufender Spalt, Bohrungen Schlitze oder dgl. ausgebildet sein.

## Patentansprüche

1. Einschraubwerkzeug (1), das einen Werkzeugkopf (3) und einen Werkzeugschaft (4) mit einem Außengewinde (5) und einem zwischen dem Werkzeugkopf (3) und dem Außengewinde (5) angeordneten Abstützbereich enthält, **dadurch gekennzeichnet, dass** der Abstützbereich durch eine an den Werkzeugkopf (3) angrenzende erste konische Anlagefläche (6) mit einem Kegelwinkel von 140° bis 179° und eine zweite konische Anlagefläche (8) mit einem Kegelwinkel von 1° bis 90° gebildet wird, wobei die den konischen Anlageflächen (6, 8) zugrunde liegenden Kegel in dieselbe Richtung zeigen.

2. Einschraubwerkzeug (1) nach Anspruch 1, **dadurch gekennzeichnet, dass** sich die zweite konische Anlagefläche (8) an die erste konische Anlagefläche (6) anschließt.

3. Einschraubwerkzeug (1) nach Anspruch 1 oder 2, **dadurch gekennzeichnet, dass** die erste konische Anlagefläche (6) einen Kegelwinkel von 170° und die zweite konische Anlagefläche einen Kegelwinkel von 10° aufweist.

4. Einschraubwerkzeug (1) nach einem der Ansprüche 1 bis 3, **dadurch gekennzeichnet, dass** am Werkzeugschaft (4) ein weiterer Abstützbereich (11) vorgesehen ist.

5. Einschraubwerkzeug (1) nach Anspruch 4, **dadurch gekennzeichnet, dass** der weitere Abstützbereich (11) kugelförmig, zylindrisch oder konisch ausgebildet ist.

6. Einschraubwerkzeug (1) nach einem der Ansprüche 1 bis 5, **dadurch gekennzeichnet, dass** das Außengewinde (5) eine zum freien Ende (10) des Werkzeugschafts (4) hin abnehmende Gewindetiefe enthält.

7. Einschraubwerkzeug (1) nach einem der Ansprüche 1 bis 6, **dadurch gekennzeichnet, dass** das Außengewinde (5) als Trapez-, Rund-, Flach- oder Spitzgewinde ausgebildet ist.

8. Einschraubwerkzeug (1) nach einem der Ansprüche 1 bis 7, **dadurch gekennzeichnet, dass** am Werkzeugschaft (4) eine Greiferrille (13) zum Einspannen des Einschraubwerkzeugs (1) vorgesehen ist.

9. Werkzeugaufnahme (2) für ein Einschraubwerkzeug (1), die eine Aufnahmeöffnung (16) mit einem Innengewinde (17) und einen zwischen einer vorderen Stirnseite der Werkzeugaufnahme (2) und dem Innengewinde (17) angeordneten Abstützbereich enthält, der durch eine an der vorderen Stirnseite der Werkzeugaufnahme (2) angrenzende erste konische Auflagefläche (7) mit einem Kegelwinkel von 140° bis 179° und eine zweite konische Auflagefläche (9) mit einem Kegelwinkel von 1° bis 90° gebildet wird, wobei die den konischen Auflageflächen (7, 9) zugrunde liegenden Kegel in dieselbe Richtung zeigen, **dadurch gekennzeichnet, dass** in Einschraubrichtung des Einschraubwerkzeugs (1) nach dem Innengewinde (17) an einem inneren Ende der Aufnahmeöffnung (16) ein als zylindrische, kugelförmige oder konische Anlagefläche (24) ausgebildeter innerer Anlagebereich vorgesehen ist.

10. Werkzeugaufnahme (2) nach Anspruch 9, **dadurch gekennzeichnet, dass** sich die zweite konische Auflagefläche (9) an die erste konische Auflagefläche (7) anschließt.

11. Werkzeugaufnahme (2) nach Anspruch 10, **dadurch gekennzeichnet, dass** die erste konische Auflagefläche (7) einen Kegelwinkel von 170° und die zweite konische Auflagefläche (9) einen Kegelwinkel von 10° aufweist.

12. Werkzeugaufnahme (2) nach einem der Ansprüche 9 bis 11, **dadurch gekennzeichnet, dass** das Innengewinde (17) eine zu dem inneren Ende der Aufnahmeöffnung (16) hin abnehmende Gewindetiefe enthält.

13. Werkzeugaufnahme (2) nach einem der Ansprüche 9 bis 12, **dadurch gekennzeichnet, dass** das Innengewinde (17) als Trapez-, Rund-, Flach- oder Spitzgewinde ausgebildet ist.

14. Werkzeugaufnahme (2) nach einem der Ansprüche 9 bis 13, **dadurch gekennzeichnet, dass** sie eine Einsatzbuchse (25) zur Aufnahme des Einschraubwerkzeugs (1) enthält.

15. Werkzeugaufnahme (2) nach einem der Ansprüche 9 bis 14, **dadurch gekennzeichnet, dass** an ihrer Außenseite eine Hülse (22) zur Umlenkung einer über radiale Bohrungen (20) nach außen geführten Kühlflüssigkeit über mindestens eine Öffnung (26) in Richtung des Einschraubwerkzeugs (1) angeordnet ist.

16. Werkzeuganordnung mit einem Einschraubwerkzeug (1) und einer Werkzeugaufnahme (2), **dadurch gekennzeichnet, dass** das Einschraubwerkzeug (1) nach einem der Ansprüche 1 bis 8 und/oder die Werkzeugaufnahme (2) nach einem der Ansprüche 9 bis 15 ausgebildet ist.

17. Werkzeuganordnung nach Anspruch 16, **dadurch gekennzeichnet, dass** der zweite Abstützbereich (11) des Einschraubwerkzeugs (1) ein Übermaß gegenüber der Anlagefläche (24) der Werkzeugaufnahme (2) aufweist und es somit bei der Montage von Einschraubwerkzeug (1) und Werkzeugaufnahme (2) zu einer Pressung zwischen Einschraubwerkzeug (1) und Werkzeugaufnahme (2) kommt.

## Claims

1. Screw-in tool (1) comprising a tool head (3) and a tool shank (4) with an external thread (5) and with a support region arranged between the tool head (3) and the external thread (5), **characterized in that** the support region is formed by a first conical abutment surface (6) with a cone angle of 140° to 179°, which adjoins the tool head (3), and by a second conical abutment surface (8) with a cone angle of 1° to 90°, wherein the cones defining the conical abutment surfaces (6, 8) point in the same direction.

2. Screw-in tool (1) according to Claim 1, **characterized in that** the second conical abutment surface (8) adjoins the first conical abutment surface (6).

3. Screw-in tool (1) according to Claim 1 or 2, **characterized in that** the first conical abutment surface (6) has a cone angle of 170° and the second conical abutment surface has a cone angle of 10°.

4. Screw-in tool (1) according to one of Claims 1 to 3, **characterized in that** a further support region (11) is provided on the tool shank (4).

5. Screw-in tool (1) according to Claim 4, **characterized in that** the further support region (11) is of spherical, cylindrical or conical form.

6. Screw-in tool (1) according to one of Claims 1 to 5, **characterized in that** the external thread (5) comprises a thread depth which decreases towards the free end (10) of the tool shank (4).

7. Screw-in tool (1) according to one of Claims 1 to 6, **characterized in that** the external thread (5) is in the form of a trapeziform, round, flat or V-shaped thread.

8. Screw-in tool (1) according to one of Claims 1 to 7, **characterized in that** a gripper groove (13) for clamping of the screw-in tool (1) is provided on the tool shank (4).

9. Tool receptacle (2) for a screw-in tool (1), comprising a receptacle opening (16) with an internal thread (17), and a support region which is arranged between a front end face of the tool receptacle (2) and the internal thread (17) and which is formed by a first conical bearing surface (7) with a cone angle of 140° to 179°, which adjoins the front end face of the tool receptacle (2), and by a second conical bearing surface (9) with a cone angle of 1° to 90°, wherein the cones defining the conical bearing surfaces (7, 9) point in the same direction,
**characterized in that** an inner abutment region in the form of a cylindrical, spherical or conical abutment surface (24) is provided at an inner end of the receptacle opening (16) after the internal thread (17) in the screw-in direction of the screw-in tool (1).

10. Tool receptacle (2) according to Claim 9, **characterized in that** the second conical bearing surface (9) adjoins the first conical bearing surface (7).

11. Tool receptacle (2) according to Claim 10, **characterized in that** the first conical bearing surface (7) has a cone angle of 170° and the second conical bearing surface (9) has a cone angle of 10°.

12. Tool receptacle (2) according to one of Claims 9 to 11, **characterized in that** the internal thread (17) comprises a thread depth which decreases towards the inner end of the receptacle opening (16).

13. Tool receptacle (2) according to one of Claims 9 to 12, **characterized in that** the internal thread (17) is in the form of a trapeziform, round, flat or V-shaped thread.

14. Tool receptacle (2) according to one of Claims 9 to 13, **characterized in that** it comprises an insert bushing (25) for receiving the screw-in tool (1).

15. Tool receptacle (2) according to one of Claims 9 to 14, **characterized in that**, on its outer side, there is arranged a sleeve (22) for diverting, via at least one opening (26), into the direction of the screw-in tool (1) a cooling liquid which is guided outwards via radial bores (20).

16. Tool arrangement having a screw-in tool (1) and having a tool receptacle (2), **characterized in that** the screw-in tool (1) is designed according to one of Claims 1 to 8 and/or the tool receptacle (2) is designed according to one of Claims 9 to 15.

17. Tool arrangement according to Claim 16, **characterized in that** the second support region (11) of the screw-in tool (1) has an oversize in relation to the abutment surface (24) of the tool receptacle (2), and pressing between the screw-in tool (1) and the tool receptacle (2) thus results when the screw-in tool (1) and the tool receptacle (2) are assembled.

## Revendications

1. Outil de vissage (1), lequel comporte une tête d'outil (3) et une tige d'outil (4) dotée d'un filetage extérieur (5) et d'une région de support disposée entre la tête d'outil (3) et le filetage extérieur (5), **caractérisé en ce que** la région de support est formée par une première surface d'appui conique (6), adjacente à la tête d'outil (3), présentant un angle de cône de 140° à 179° et une deuxième surface d'appui conique (8) présentant un angle de cône de 1° à 90°, les cônes qui sont sous-jacents aux surfaces d'appui coniques (6, 8) étant orientés dans la même direction.

2. Outil de vissage (1) selon la revendication 1, **caractérisé en ce que** la deuxième surface d'appui conique (8) est adjacente à la première surface d'appui conique (6) .

3. Outil de vissage (1) selon la revendication 1 ou 2, **caractérisé en ce que** la première surface d'appui conique (6) présente un angle de cône de 170° et la deuxième surface d'appui conique présente un angle de cône de 10°.

4. Outil de vissage (1) selon l'une des revendications 1 à 3, **caractérisé en ce qu'**une autre région de support (11) est prévue sur la tige d'outil (4).

5. Outil de vissage (1) selon la revendication 4, **caractérisé en ce que** l'autre région de support (11) est réalisée de manière sphérique, cylindrique ou conique.

6. Outil de vissage (1) selon l'une des revendications 1 à 5, **caractérisé en ce que** le filetage extérieur (5) comporte une profondeur de filetage diminuant vers l'extrémité libre (10) de la tige d'outil (4).

7. Outil de vissage (1) selon l'une des revendications 1 à 6, **caractérisé en ce que** le filetage extérieur (5) est réalisé sous forme de filetage trapézoïdal, rond, carré ou triangulaire.

8. Outil de vissage (1) selon l'une des revendications 1 à 7, **caractérisé en ce qu'**une rainure de préhension (13) servant à serrer l'outil de vissage (1) est prévue sur la tige d'outil (4).

9. Logement d'outil (2) pour un outil de vissage (1), qui comporte une ouverture de réception (16) dotée d'un filetage intérieur (17) et une région de support disposée entre un côté frontal avant du logement d'outil (2) et le filetage intérieur (17), laquelle région de support est formée par une première surface de portée conique (7), adjacente au côté frontal avant du logement d'outil (2), présentant un angle de cône de 140° à 179° et une deuxième surface de portée conique (9) présentant un angle de cône de 1° à 90°, les cônes qui sont sous-jacents aux surfaces de portée coniques (7, 9) étant orientés dans la même direction,
**caractérisé en ce qu'**une région d'appui intérieure réalisée sous forme de surface d'appui (24) cylindrique, sphérique ou conique est prévue après le filetage intérieur (17) à une extrémité intérieure de l'ouverture de réception (16) dans la direction de vissage de l'outil de vissage (1).

10. Logement d'outil (2) selon la revendication 9, **caractérisé en ce que** la deuxième surface de portée conique (9) est adjacente à la première surface de portée conique (7).

11. Logement d'outil (2) selon la revendication 10, **caractérisé en ce que** la première surface de portée conique (7) présente un angle de cône de 170° et la deuxième surface de portée conique (9) présente un angle de cône de 10°.

12. Logement d'outil (2) selon l'une des revendications 9 à 11, **caractérisé en ce que** le filetage intérieur (17) comporte une profondeur de filetage diminuant vers l'extrémité intérieure de l'ouverture de réception (16).

13. Logement d'outil (2) selon l'une des revendications 9 à 12, **caractérisé en ce que** le filetage intérieur (17) est réalisé sous forme de filetage trapézoïdal, rond, carré ou triangulaire.

14. Logement d'outil (2) selon l'une des revendications 9 à 13, **caractérisé en ce qu'**il comporte un manchon d'insertion (25) servant à la réception de l'outil de vissage (1).

15. Logement d'outil (2) selon l'une des revendications 9 à 14, **caractérisé en ce qu'**une douille (22) servant à dévier un liquide de refroidissement guidé vers l'extérieur via des alésages radiaux (20) via au moins une ouverture (26) en direction de l'outil de vissage (1) est disposée sur son côté extérieur.

16. Ensemble d'outil comportant un outil de vissage (1) et un logement d'outil (2), **caractérisé en ce que** l'outil de vissage (1) est réalisé selon l'une des revendications 1 à 8 et/ou le logement d'outil (2) est réalisé selon l'une des revendications 9 à 15.

17. Ensemble d'outil selon la revendication 16, **caractérisée en ce que** la deuxième région de support (11) de l'outil de vissage (1) présente une surdimension par rapport à la surface d'appui (24) du logement d'outil (2) et donc, lors du montage de l'outil de vissage (1) et du logement d'outil (2), il se produit un pressage entre l'outil de vissage (1) et le logement d'outil (2).
